# EUROPEAN PATENT APPLICATION

(11) **EP 4 092 990 A2**
(43) Date of publication of application: **23.11.2022**
(21) Application number: 22192578.7
(22) Date of filing: 29.08.2022
(51) Int. Cl.: H04L 43/0811, H04W 4/40, H04W 76/10, H04L 43/16

(54) **DATA PROCESSING METHOD AND APPARATUS**

(30) Priority: 30.08.2021 CN 202111007672
(71) Applicant: Apollo Intelligent Connectivity (Beijing) Technology Co., Ltd., Beijing 100176 (CN)
(72) Inventor: HUANG, Qili, Beijing, 100176 (CN)
(74) Representative: Studio Torta S.p.A.

(57) **Abstract**

The present disclosure provides a data processing method and apparatus, which relate to the field of data processing, and in particular, to the fields of internet of vehicles and smart cockpits. The specific implementation solution is: the electronic device obtains wired connection stability of the wired channel; when the wired connection stability is greater than or equal to a first threshold, the electronic device determines the wired channel as a target channel; when the wired connection stability is less than the first threshold, the electronic device obtains power of the electronic device and wireless connection stability of the wireless channel, and the electronic device determines, according to the power of the electronic device and the wireless connection stability, a target channel from the wired channel and the wireless channel; and the electronic device performs data transmission with the vehicle through the target channel. By connecting the electronic device and the vehicle through both the wired channel and the wireless channel, such two channels can be switched afterwards, which can effectively improve the connection stability between the electronic device and the vehicle.

## Description

### TECHNICAL FIELD

The present disclosure relates to the fields of internet of vehicles and smart cockpits in the field of data processing, and in particular, to a data processing method and apparatus.

### BACKGROUND

With the continuous development of vehicle-related technologies, at present, a connection can be established between a current vehicle and an electronic device for data transmission.

At present, in the prior art, when establishing a connection between the vehicle with the electronic device, the vehicle and the electronic device are connected, typically, by two sections of a universal serial bus (USB) connection cable, respectively. Therefore, a wired channel is established between the vehicle and the electronic device for data transmission.

However, connecting via the USB connection cable, with problems like long-term use of the USB connection cable and USB connection cable quality, leads to unstable connection between the vehicle and the electronic device.

### SUMMARY

The present disclosure provides a data processing method and apparatus.

According to a first aspect of the present disclosure, there is provided a data processing method that is applied to an electronic device, where the electronic device is connected to a vehicle through a wired channel and a wireless channel, and the method includes:
obtaining, by the electronic device, wired connection stability of the wired channel;
when the wired connection stability is greater than or equal to a first threshold, determining, by the electronic device, the wired channel as a target channel;
when the wired connection stability is less than the first threshold, obtaining, by the electronic device, power of the electronic device and wireless connection stability of the wireless channel, and determining, by the electronic device, according to the power of the electronic device and the wireless connection stability, a target channel from the wired channel and the wireless channel; and
performing, by the electronic device, data transmission with the vehicle through the target channel.

According to a second aspect of the present disclosure, there is provided a data processing apparatus that is applied to an electronic device, where the electronic device is connected to a vehicle through a wired channel and a wireless channel, and the apparatus includes:
a determining module, configured to, when the wired connection stability is greater than or equal to a first threshold, determine, by the electronic device, the wired channel as a target channel;
a second obtaining module, configured to, when the wired connection stability is less than the first threshold, obtain, by the electronic device, power of the electronic device and wireless connection stability of the wireless channel, and determine, by the electronic device, according to the power of the electronic device and the wireless connection stability, a target channel from the wired channel and the wireless channel; and
a transmitting module, configured to perform, by the electronic device, data transmission with the vehicle through the target channel.

According to a third aspect of the present disclosure, there is provided an electronic device, including:
at least one processor; and
a memory connected in communication with the at least one processor; where,
the memory stores instructions executable by the at least one processor, and the instructions are executed by the at least one processor to enable the at least one processor to perform the method according to the first aspect.

According to a fourth aspect of the present disclosure, there is provided a non-transitory computer-readable storage medium storing computer instructions, where the computer instructions are used to cause a computer to perform the method according to the first aspect.

According to a fifth aspect of the present disclosure, there is provided a computer program product, including: a computer program stored in a readable storage medium, at least one processor of an electronic device can read the computer program from the readable storage medium, and the at least one processor executes the computer program to enable an electronic device to perform the method according to the first aspect.

On the basis of the technology of the present disclosure, the connection stability between the vehicle and the electronic device is improved.

It should be understood that what is described herein is not intended to identify key or critical features of embodiments of the present disclosure, nor is it intended to limit the scope of the present disclosure. Other features of the present disclosure will become readily understood from the following description.

### BRIEF DESCRIPTION OF THE DRAWINGS

The accompanying drawings are for better understanding of the solution and do not constitute a limitation onto the present disclosure, in which:
FIG. 1 is a schematic diagram of implementation of wired connection between a vehicle and a mobile phone according to an embodiment of the present disclosure;
FIG. 2 is a schematic diagram of implementation of wireless connection between the vehicle and the mobile phone according to an embodiment of the present disclosure;
FIG. 3 is flowchart I of a data processing method according to an embodiment of the present disclosure;
FIG. 4A and FIG. 4B are flowchart II of a data processing method according to an embodiment of the present disclosure;
FIG. 5 is a schematic diagram of implementation of a heartbeat mechanism according to an embodiment of the present disclosure;
FIG. 6 is flowchart III of a data processing method according to an embodiment of the present disclosure;
FIG. 7 is schematic diagram I of implementation of establishing a connection between an electronic device and a vehicle according to an embodiment of the present disclosure;
FIG. 8 is schematic diagram II of implementation of establishing a connection between the electronic device and the vehicle according to an embodiment of the present disclosure;
FIG. 9 is a schematic structural diagram of a data processing apparatus according to an embodiment of the present disclosure; and
FIG. 10 is a block diagram of an electronic device for implementing a data processing method according to an embodiment of the present disclosure.

### DESCRIPTION OF EMBODIMENTS

Exemplary embodiments of the present disclosure are described below with reference to the accompanying drawings, which include various details of the embodiments of the present disclosure for understanding the present disclosure, and should be considered as merely exemplary. Therefore, those of ordinary skill in the art should realize that various changes and modifications can be made to the embodiments described herein without departing from the scope of the present disclosure. Likewise, for clarity and conciseness, descriptions of well-known functions and structures are omitted below.

In order to better understand the technical solution of the present disclosure, the related technologies involved in the present disclosure will be further introduced in detail below.

With the continuous development of the field of internet of vehicles, there are more and more scenarios where vehicles and electronic devices are connected to realize data transmission. For example, at present, for more and more vehicles, on-board interconnection is realized based on CarLife, and the number of users using such function also increases.

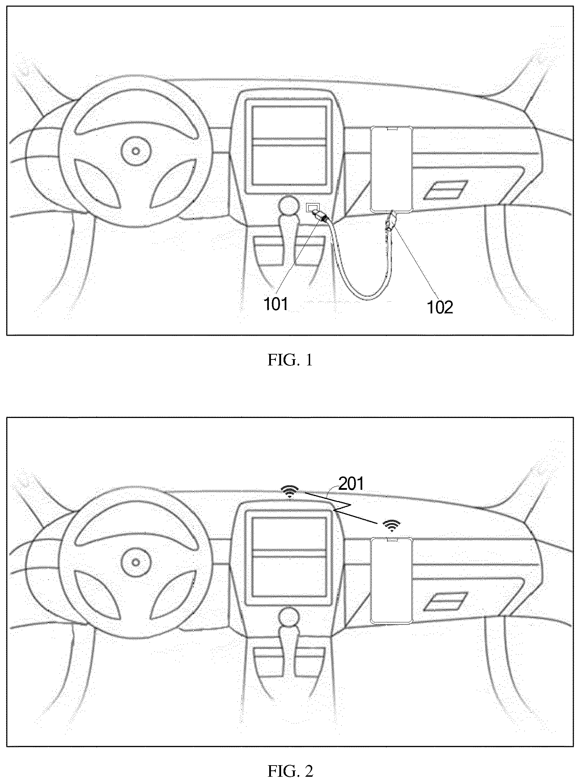

The vehicle in the following vehicle and the electronic device refers to the mobile phone, and the connected application is CarLife, which are used as an example, to introduce the connection between the vehicle and the electronic device. In most cases, the current CarLife connection method still uses a USB to establish a wired connection. For example, it can be understood with reference to FIG. 1. FIG. 1 is a schematic diagram of implementation of wired connection between a vehicle and a mobile phone according to an embodiment of the present disclosure.

Referring to FIG. 1, for example, one end 101 of the USB connection cable is connected to a mobile phone, and the other end 102 of the USB connection cable is connected to a vehicle, thereby establishing a data transmission channel between the mobile phone and the vehicle for data transmission.

However, there are many problems with using the USB connection cable, such as, the USB connection cable is too long to cause driving safety problems; the USB connection cable is too short to cause no place to place the mobile phone; long-term use of USB connection cable causes increased loss; and the USB connection cable quality cannot be guaranteed, etc. Therefore, using a USB connection cable for wired connection may cause the problem of unstable connection, and the reason for the unstable connection cannot be traced back at the same time.

For the problem of unstable USB wired connection, at present, a wireless connection method between the vehicle and the mobile phone has also been developed. For example, the current CarLife has implemented WiFi wireless connection method, and it can be understood with reference to FIG. 2, for example. FIG. 2 is a schematic diagram of implementation of wireless connection between the vehicle and the mobile phone according to an embodiment of the present disclosure. As shown in FIG. 2, a wireless transmission channel 201 can be established between the vehicle and the mobile phone, for example, by means of WiFi.

Likewise, the wireless connection may also have an unstable connection between the vehicle and the mobile phone because of hardware factors, software factors, environmental factors, etc.

Therefore, in the current implementation solutions of related technologies for the vehicle and the mobile phone, whether it is a wired connection or a wireless connection, there is a problem of unstable connection.

For the stability of the USB wired connection, the loss of a USB socket of the vehicle and the loss of the USB connection cable are inevitable and naturally occurring phenomena. It is generally recommended to directly carry out vehicle maintenance and repair the USB socket of the vehicle, or change the USB connection cable. For the stability of a WiFi wireless connection, there are many factors that affect the connection, for example, the frequency band of the hardware WiFi module, software WiFi Socket robustness, Bluetooth and WiFi signal interference, and other problems. In the case of a connection problem, a connection process is generally performed for another time. In the implementation of related technologies, the implementation mode of wired connection and that of wireless connection are independent of each other, and no matter which connection method is used, there is a problem of unstable connection.

In view of the problem in the related technology, the present disclosure proposes the following technical ideas: for USB wired connection method and WiFi wireless connection method, a connection buffer pool is created; both the wired connection and the wireless connection between the vehicle and the mobile phone are maintained. After that, the logic of connection switching is performed as required. In this process, the user is indifferent to the switching of the connection method, and the connection stability between the vehicle and the mobile phone can be improved at the same time.

On the basis of the above description, the data processing method provided by the present disclosure will be introduced below with reference to specific embodiments. It should be noted that the vehicle in each embodiment of the present disclosure may be the vehicle described above, and the electronic device of each embodiment of the present disclosure may be the mobile phone described above, or the electronic device may be a computer device, a tablet or a mobile phone (or called as a "cellular" phone), etc., or it can also be a portable, pocket-sized, hand-held, computer-built mobile apparatus or device, etc. This embodiment does not limit the specific implementation of the electronic device, which may be any terminal device that can establish a connection with the vehicle.

On the basis of the above described contents, the data processing method provided by an embodiment of the present disclosure will be introduced below with reference to specific embodiments. First, the scenarios of the embodiments in the present disclosure are described. The embodiments of the present disclosure can be applied to electronic devices, and the electronic device can be, for example, the above illustrated mobile phone, tablet computer, etc. The electronic device and the vehicle in this embodiment are connected through the wired channel and the wireless channel; that is to say, both wired connection and wireless connection are maintained between the electronic device and the vehicle, thereby a connection can be performed through both the wired channel and the wireless channel.

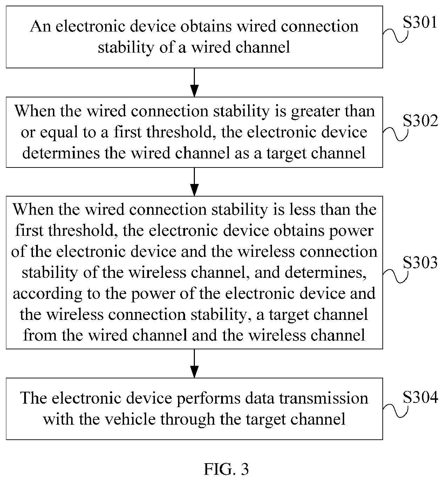

The following is first described with reference to FIG. 3, which is flowchart I of a data processing method according to an embodiment of the present disclosure.

As shown in FIG. 3, the method includes the following.

S301, an electronic device obtains wired connection stability of a wired channel.

In this embodiment, the electronic device can obtain the wired connection stability of the wired channel between the vehicle and the electronic device. In a possible implementation, the wired connection stability may be indicated by, for example, the response rate of the heartbeat mechanism of the wired channel, or the wired connection stability can also be indicated by the packet loss rate of the wired channel during data transmission, etc. This embodiment does not specifically limit the specific implementation of the wired connection stability, which can be selected as required, and any parameter that can be used to indicate the connection stability of the wired channel can be used as the wired connection stability in this embodiment.

In this embodiment, the electronic device and the vehicle are connected through a wired channel and a wireless channel at the same time, understandably, at one point, there is only one channel for data transmission between the electronic device and the vehicle. At the same time, in a possible implementation, because the wired connection stability is higher than the wireless connection stability, the priority of the wired channel can be set, for example, higher than that of the wireless channel. Therefore, in general, for example, data transmission is performed through the wired channel.

When obtaining the wired connection stability of the wired channel, for example, the wired connection stability may be obtained by taking a preset duration as a period; for example, the wired connection stability is obtained every 1 minute. In the actual implementation process, the specific implementation of the preset duration may be selected as required, which is not limited in this embodiment.

S302, when the wired connection stability is greater than or equal to a first threshold, the electronic device determines the wired channel as a target channel.

After obtaining the wired connection stability, whether the current wired connection is stable can be determined according to the wired connection stability. For example, the wired connection stability can be compared with the first threshold.

In a possible implementation, when it is determined that the wired connection stability is greater than or equal to the first threshold, for example, it can be determined that the stability of the wired channel is relatively high, therefore, the electronic device can determine the wired channel as the target channel. The target channel in this embodiment is determined to be used for data transmission, that is, when the wired channel stability is high, the wired channel is maintained for data transmission between the vehicle and the electronic device.

In the actual implementation process, the specific setting of the first threshold may be selected as required, which is not limited in this embodiment.

S303, when the wired connection stability is less than the first threshold, the electronic device obtains power of the electronic device and the wireless connection stability of the wireless channel, and determines, according to the power of the electronic device and the wireless connection stability, a target channel from the wired channel and the wireless channel.

In another possible implementation, when it is determined that the wired connection stability is less than the first threshold, for example, it can be determined that the current stability of the wired channel is relatively low. At this point, it may be considered by the electronic device that whether to use the wireless channel for data transmission, for example. Therefore, in this embodiment, the electronic device can obtain, for example, both the power of the electronic device and the wireless connection stability of the wireless channel.

The implementation of the wireless connection stability is similar to the implementation of the wired connection stability described above. For example, it can be the response rate of the heartbeat mechanism of the wireless channel, or it can also be the packet loss rate of the wireless channel. It can be understood that in the implementation of wireless connection, the power consumption of electronic device is relatively large, therefore, it is also necessary to obtain the power of the electronic device.

After that, the target channel from the wired channel and the wireless channel can be determined according to the power of the electronic device and the wireless connection stability. It can be understood that, in the implementation of determining the target channel from the wired channel and the wireless channel, the channel with higher stability can be determined as the target channel on the basis of satisfying the power of the electronic device, and the implementation thereof may be selected as required, which in not limited in this embodiment.

S304, the electronic device performs data transmission with the vehicle through the target channel.

After determining the target channel, the electronic device can perform data transmission with the vehicle through the target channel. The target channel thereof can be a wired channel or a wireless channel, which is not limited in this embodiment and can be achieved according to the selection process described above.

The data processing method provided by the embodiment of the present disclosure includes: the electronic device obtains wired connection stability of the wired channel; when the wired connection stability is greater than or equal to a first threshold, the electronic device determines the wired channel as a target channel; when the wired connection stability is less than the first threshold, the electronic device obtains power of the electronic device and wireless connection stability of the wireless channel, and the electronic device determines, according to the power of the electronic device and the wireless connection stability, a target channel from the wired channel and the wireless channel; and the electronic device performs data transmission with the vehicle through the target channel. The electronic device and the vehicle are connected through both the wired channel and the wireless channel, and the connection is switched between the wired channel and the wireless channel afterwards according to the situation of the actual data of the wired channel and the wireless channel, so that the target channel is selected from the wired channel and the wireless channel, and then data transmission is performed according to the target channel. Since the two data transmission channels can be switched as required, the connection stability between the electronic device and the vehicle can be effectively improved.

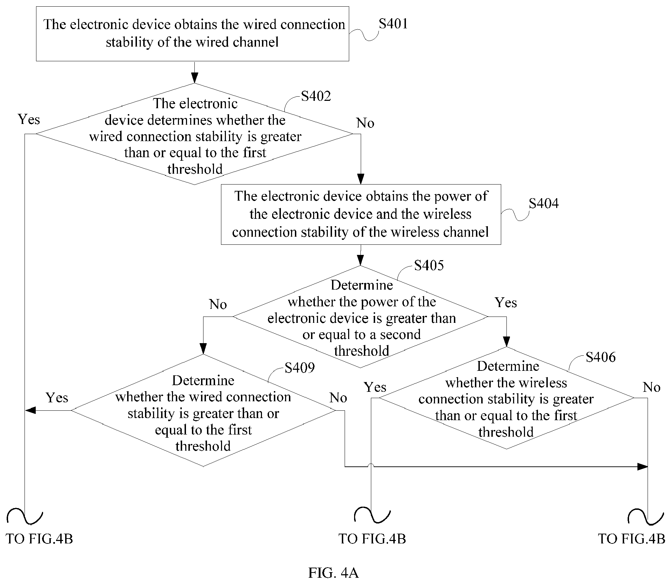

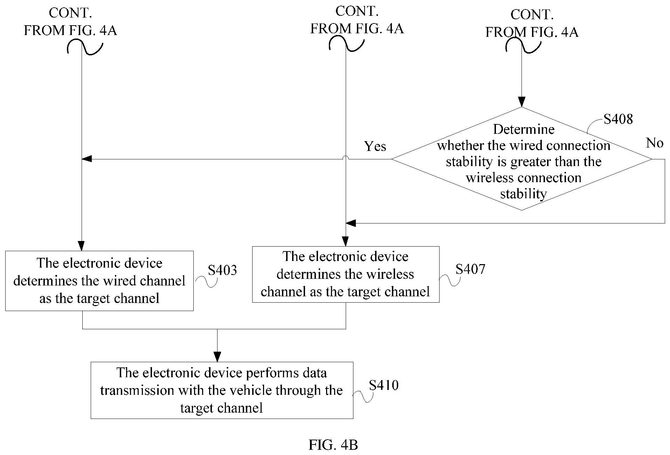

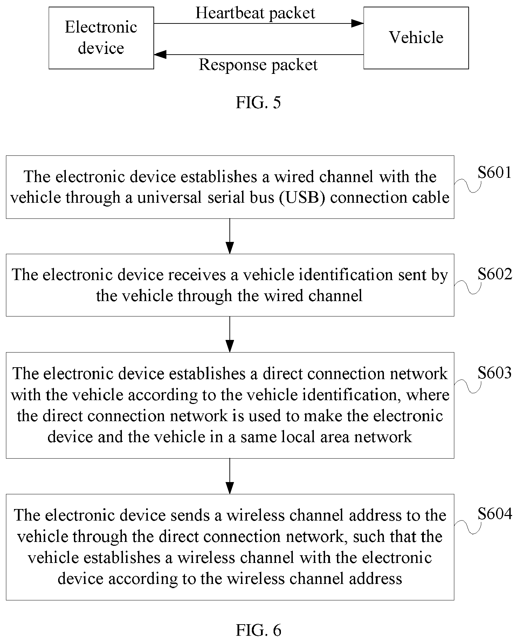

On the basis of the above embodiments, the data processing method provided by the embodiments of the present disclosure are further described in detail below with reference to FIG. 4A, FIG. 4B, and FIG. 5. FIG. 4A and FIG. 4B are flowchart II of a data processing method according to an embodiment of the present disclosure. FIG. 5 is a schematic diagram of implementation of a heartbeat mechanism according to an embodiment of the present disclosure.

As shown in FIG. 4A and FIG. 4B are, the method includes the following.

S401, the electronic device obtains the wired connection stability of the wired channel.

The implementation of S401 is similar to that of S301 described above. A possible implementation of obtaining the wired connection stability of the wired channel by the electronic device in the embodiment of the present disclosure will be further described below with reference to FIG. 5.

In this embodiment, FIG. 5 may be referred to for understanding. Assuming that the data transmission channel between the electronic device and the vehicle in FIG. 5 is a wired channel, where the electronic device can periodically send a heartbeat packet to the vehicle through the wired channel, and the electronic device can receive the response packet corresponding to the heartbeat packet through the wired channel, which is the heartbeat mechanism of the wired channel. And it can also be understood as that the electronic device periodically sends "Are you there?" to the vehicle through the wired channel, and then after receiving such message, the vehicle sends "I'm here." to the electronic device through the wired channel, which is the heartbeat mechanism of the wired channel.

In this embodiment, the electronic device can obtain the first number of heartbeat packets sent to the vehicle through the wired channel within a preset period of time, the electronic device obtains the second number of received response packets sent by the vehicle through the wired channel within the preset period of time, and the wired connection stability can be determined afterwards according to the first number and the second number.

For example, the ratio between the second number and the first number may be determined as the wired connection stability. It can be understood that the wired connection stability herein can also be understood as the response rate within a preset period of time.

The specific duration of the preset period of time can be selected as required, and the preset period of time can be, for example, one second; for example, the first number and the second number per second can be obtained periodically, so as to obtain the wired connection stability per second, and the specific implementation of the wired connection stability may be selected as required, which is not limited in this embodiment.

It can be introduced here with a specific example. For example, the duration of the current preset period of time is 1 second, assuming that within this 1 second, the first number of heartbeat packets sent by the electronic device through the wired channel is 100, and the second number of response packets sent by the vehicle received by the electronic device within 1 second is 80, the wired connection stability is 80%.

S402, the electronic device determines whether the wired connection stability is greater than or equal to the first threshold; if yes, S403 is performed, and if not, S404 is performed.

After the wired connection stability is determined, the wired connection stability can be compared with the first threshold.

S403, the electronic device determines the wired channel as the target channel.

In a possible implementation, if it is determined that the wired connection stability is greater than or equal to the first threshold, the electronic device may determine the wired channel as the target channel, the implementation thereof is similar to the implementation of S302 described above, and will not be repeated herein.

S404, the electronic device obtains the power of the electronic device and the wireless connection stability of the wireless channel.

In another possible implementation, if it is determined that the wired connection stability is less than the first threshold, the electronic device can obtain the power of the electronic device and the wireless connection stability of the wireless channel, the implementation thereof is similar to the implementation of S303 described above. A possible implementation for the electronic device to obtain the wireless connection stability of the wireless channel in the embodiment of the present disclosure will be further described below with reference to FIG. 5.

In this embodiment, FIG. 5 may be referred to for understanding. Assuming that the data transmission channel between the electronic device and the vehicle in FIG. 5 is a wireless channel, the electronic device can periodically send a heartbeat packet to the vehicle through the wireless channel, and the electronic device can receive the response packet corresponding to the heartbeat packet through the wireless channel, which is the heartbeat mechanism of the wireless channel, which is similar to the heartbeat mechanism of the wired channel described above.

In this embodiment, the electronic device can obtain the third number of heartbeat packets sent to the vehicle through the wireless channel within a preset period of time, the electronic device obtains the fourth number of received response packets sent by the vehicle through the wireless channel within the preset period of time, and then the wireless connection stability can be determined afterwards according to the third number and the fourth number.

For example, the ratio between the third number and the fourth number may be determined as the wireless connection stability. It can be understood that the wireless connection stability herein can also be understood as the response rate within the preset period of time.

S405, determine whether the power of the electronic device is greater than or equal to a second threshold; if yes, S406 is performed, and if not, S409 is performed.

Since the data transmission between the electronic device and the vehicle is carried out through the wireless channel, the power consumption of the electronic device is relatively high. Therefore, it can currently be determined whether the power of the electronic device is greater than or equal to the second threshold, and the specific implementation of the second threshold may be selected as required, for example, it may be 30%, which is not limited in this embodiment.

S406, determine whether the wireless connection stability is greater than or equal to the first threshold; if yes, S407 is performed, and if not, S408 is performed.

In a possible implementation, if it is determined that the power of the electronic device is greater than or equal to the first threshold, it can be determined that the power of the electronic device is relatively sufficient. That is, it is currently possible to use a wireless channel for data transmission. However, it is also necessary to further determine whether the wireless channel is stable. For example, it can be determined whether the wireless connection stability is greater than or equal to the first threshold.

S407, the electronic device determines the wireless channel as the target channel.

In a possible implementation, if it is determined that the wireless connection stability is greater than or equal to the first threshold, it can be determined that the current power of the electronic device can support the use of wireless channel for data transmission, and the wireless channel is relatively stable at the same time. Therefore, the electronic device can determine the wireless channel as the target channel.

S408, determine whether the wired connection stability is greater than the wireless connection stability; if yes, S403 is performed, and if not, S407 is performed.

In another possible implementation, if it is determined that the wireless connection stability is less than the first threshold, it can be determined that the current power of the electronic device can support the use of wireless channel for data transmission, while the wireless channel is not very stable; at this point, it can be determined that both the wired channel and the wireless channel are not very stable. Therefore, for example, a more stable one can be selected from the wired channel and the wireless channel for data transmission.

The prior connection stability of the wired channel and the wireless connection stability of the wireless channel are determined above; for example, the wired connection stability can be compared with the wireless connection stability; and for example, it can be determined that whether the wired connection stability is greater than the wireless connection stability.

In a possible implementation, if the wired connection stability is greater than the wireless connection stability, it can be determined that the wired channel stability is higher, and the wired channel can be determined as the target channel.

If the wired connection stability is less than the wireless connection stability, it can be determined that the wireless channel stability is higher, and the wireless channel can be determined as the target channel.

S409, determine whether the wired connection stability is greater than or equal to the first threshold; if so, S403 is performed, and if not, S408 is performed.

Alternatively, in the above determination as to whether the power of the electronic device is greater than or equal to a second threshold, if it is determined that the power of the electronic device is less than the second threshold, it can be determined that the remaining power of the current electronic device is insufficient, or it can also be understood that it does not support the wireless channel for data transmission. At this point, it can be determined again whether the wired connection stability is greater than or equal to the first threshold, because the connection channel stability is always changing.

At this point, if it is determined that the wired connection stability is greater than or equal to the first threshold, it can be determined that the wired connection stability is normal now, and the wired channel can be determined as the target channel.

At this time, if it is determined that the wired connection stability is less than the first threshold, it can be determined that the wired connection stability is not normal yet at this time, and the wired connection stability can be compared with the wireless connection stability, so that the channel with higher connection stability is determined as the target channel. Alternatively, in an optional implementation, when it is determined that the wired connection stability is less than the first threshold, the wireless channel can be directly determined as the target channel.

S410, the electronic device performs data transmission with the vehicle through the target channel.

After determining the target device, the electronic device can perform data transmission with the vehicle through the target channel.

In a possible implementation, since the priority of the wired channel in this embodiment is higher than that of the wireless channel, after determining the wireless channel as the target channel, it is also possible to periodically determine whether the wired connection stability of the wired channel is greater than or equal to the first threshold value with the preset period of time as a duration. When the wired connection stability is greater than or equal to the first threshold, the target channel can be switched from the wireless channel back to the wired channel, and then the data transmission can be performed according to the wired channel.

In the data processing method provided by the embodiments of the present disclosure, through a series of channel switching mechanisms, the channel having higher stability is selected from the wired channel and the wireless channel as the target channel, and then the data transmission between the vehicle and the electronic device is performed according to the target channel, thereby effectively improving the connection stability between the vehicle and the electronic device. At the same time, since WiFi wireless connection is used alone, it is a challenge for the power and performance of the electronic device. The electronic device may be overheated and may consume too much power, therefore, when the USB-Socket channel is buffered, the USB-Socket channel is used preferentially to transfer data. Even if the USB-Socket channel is unstable, the WiFi-Socket channel can be switched to continue working, thereby effectively improving the performance of the electronic device and saving the power of the electronic device.

On the basis of above embodiments, it can be determined that in this embodiment, the electronic device and the vehicle are connected through a wired channel and a wireless channel, and the electronic device is required to establish the wired channel connection and the wireless channel connection with the vehicle.

In a possible implementation, for example, the wired channel connection can be established first, and the wireless channel connection can be established based on the wired channel; or the wireless channel connection can be established first, and then the wired channel connection can be established. Next, the two implementations are described, respectively.

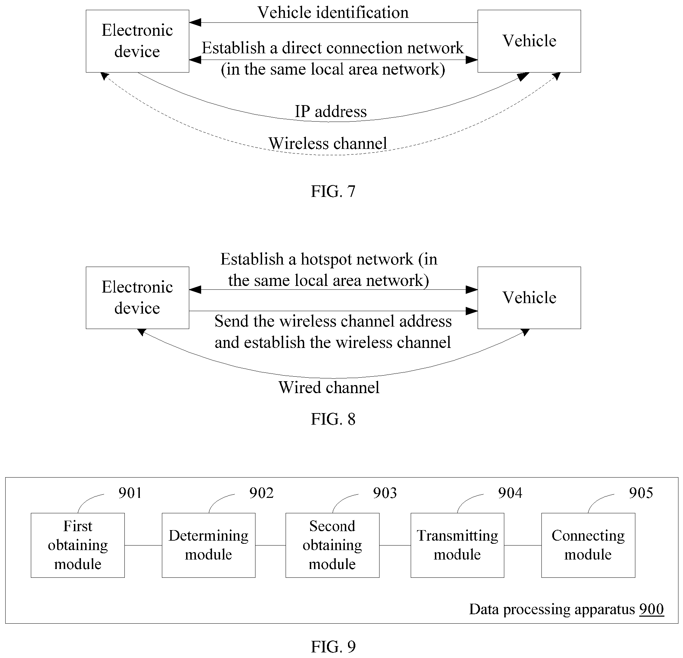

First, the implementation of establishing a wired connection and then establishing a wireless connection is introduced with reference to FIG. 6 to FIG. 7. FIG. 6 is flowchart III of a data processing method according to an embodiment of the present disclosure. FIG. 7 is schematic diagram I of implementation of establishing a connection between an electronic device and a vehicle according to an embodiment of the present disclosure

As shown in FIG. 6, the method includes:
S601, the electronic device establishes a wired channel with the vehicle through a universal serial bus (USB) connection cable.

In this embodiment, for example, the electronic device may first establish the wired channel with the vehicle through the USB connection cable. For example, after a USB-socket channel is established, the wired connection of the USB-socket channel may be maintained.

S602, the electronic device receives a vehicle identification sent by the vehicle through the wired channel.

After that, the electronic device can receive the vehicle identification sent by the vehicle through the wired channel, and the vehicle identification in this embodiment may be, for example, a device name of the WiFi-Direct.

For example, FIG. 7 may be referred to for understanding. For example, the vehicle can obtain the device name of the WiFi-Direct of the vehicle, and then the device name of the WiFi-Direct is sent to the electronic device through the above wired channel, therefore, the electronic device can obtain the vehicle identification.

S603, the electronic device establishes a direct connection network with the vehicle according to the vehicle identification, where the direct connection network is used to make the electronic device and the vehicle in a same local area network.

After receiving the vehicle identification, the electronic device may establish the direct connection network with the vehicle according to the vehicle identification. The direct connection network in this embodiment is used to make the electronic device and the vehicle in the same local area network.

Referring to FIG. 7, for example, the electronic device can initiate, according to the device name of the WiFi-Direct connection of the vehicle, the WiFi-Direct to the vehicle, and the electronic device and the vehicle are in the same local area network after the WiFi-Direct is established.

S604, the electronic device sends a wireless channel address to the vehicle through the direct connection network, such that the vehicle establishes a wireless channel with the electronic device according to the wireless channel address.

After the electronic device established a direct connection network with the vehicle, the electronic device can send the wireless channel address to the vehicle through the direct connection network.

For example, referring to FIG 7, after the WiFi-Direct connection between the electronic device and the vehicle is successful, the electronic device may, for example, broadcasts and transmits the WiFi internet protocol (IP) of the electronic device through the user datagram protocol (UDP). Since the vehicle and the electronic device are in the same local area network, the vehicle can receive the WiFi IP sent by the electronic device, and then establish a wireless channel according to the WiFi IP; for example, it may a WiFi-Socket channel, and the wireless channel can be buffered, so as to enable both the wireless connection and the wired connection.

In the data processing method provided by the embodiment of the present disclosure, a wired channel between the electronic device and the vehicle is first established, and then a direct connection network is established between the electronic device and the vehicle based on the wired channel, so that the electronic device and the vehicle are in the same local area network. After that, the wireless channel is established between the electronic device and the vehicle by synchronizing the WiFi IP based on the local area network. Afterwards, both the wired channel and the wireless channel are buffered. Therefore, it may be simply and effectively achieved that both the wired connection and the wireless connection can be established between the electronic device and the vehicle.

On the basis of the above embodiments, the following describes the implementation of establishing a wireless connection first and then the wired connection with reference to FIG. 8. FIG. 8 is schematic diagram II of implementation of establishing a connection between the electronic device and the vehicle according to an embodiment of the present disclosure.

As shown in FIG. 8, in this embodiment, the electronic device can send the wireless channel address to the vehicle through the hotspot network, so that the vehicle can establish a wireless channel with the electronic device according to the wireless channel address.

Specifically, the electronic device can enable the hotspot, and the vehicle can then connect to the hotspot of the electronic device, so as to establish a hotspot network between the electronic device and the vehicle. The hotspot network in this embodiment is also used to enable the electronic device and the vehicle to be in the same local area network.

Afterwards, the electronic device may, for example, broadcast and transmit the WiFi IP of the electronic device through UDP. Since the electronic device and the vehicle are in the same local area network, the vehicle can receive the WiFi IP of the electronic device, and then can establish a wireless channel according to the WiFi IP; for example, it can be a WiFi-Socket channel, and the wireless channel can be buffered.

The electronic device and the vehicle can then establish the wired channel through the USB connection cable, for example, it can be the USB-Socket channel, and the wired channel is buffered to maintain both the wireless connection and the wired connection.

In the data processing method provided by the embodiment of the present disclosure, the wireless channel between the electronic device and the vehicle is first established. Specifically, the electronic device and the vehicle are placed in the same local area network through the hotspot network, and then the electronic device and the vehicle synchronize the WiFi IP based on the local area network. In this way, the wireless channel can be established, the wired channel can also be established through the USB connection cable, and both the wired channel and the wireless channel are then buffered. Therefore, it may be simply and effectively achieved that both the wired connection and the wireless connection can be established between the electronic device and the vehicle.

In this embodiment, the wired connection can be established first and then the wireless connection can be established, or the wireless connection can be established first and then the wired connection can be established, thereby effectively improving the flexibility of establishing and buffering both the wired channel and the wireless channel between the vehicle and the electronic.

In summary, the data processing method provided by the embodiment of the present disclosure proposes a dynamic switching plan between a USB wired connection and a WiFi wireless connection of the on-board interconnection. Whether the user uses the USB wired connection or the WiFi wireless connection, the connection method can be buffered. The current connection stability is determined by heartbeat detection, the connection mode will be switched in the case of the unstable connection, and the whole process is not perceived by the user. This design will bring the user a very good interactive experience, and greatly improve the use stability of on-board interconnection.

FIG. 9 is a schematic structural diagram of a data processing apparatus according to an embodiment of the present disclosure. As shown in FIG. 9, a data processing device 900 in this embodiment may include: a first obtaining module 901, a determining module 902, a second obtaining module 903, a transmitting module 904, and a connecting module 905.

The first acquisition module 901 is configured to obtain, by the electronic device, wired connection stability of the wired channel.

The determining module 902 is configured to, when the wired connection stability is greater than or equal to a first threshold, determine, by the electronic device, the wired channel as a target channel.

The second obtaining module 903, configured to, when the wired connection stability is less than the first threshold, obtain, by the electronic device, power of the electronic device and wireless connection stability of the wireless channel, and determine, by the electronic device, according to the power of the electronic device and the wireless connection stability, a target channel from the wired channel and the wireless channel.

The transmitting module 904 is configured to perform, by the electronic device, data transmission with the vehicle through the target channel.

In a possible implementation, the determining module 902 is specifically configured to:
when the power of the electronic device is greater than or equal to a second threshold, if the wireless connection stability is greater than or equal to the first threshold, determine, by the electronic device, the wireless channel as the target channel; and if the wireless connection stability is less than the first threshold, determine, by the electronic device, the target channel according to the wired connection stability and the wireless connection stability; and
when the power of the electronic device is less than the second threshold, if the wired connection stability is greater than or equal to the first threshold, determine, by the electronic device, the wired channel as the target channel; and if the wired connection stability is less than the first threshold, determine, by the electronic device, the target channel according to the wired connection stability and the wireless connection stability.

In a possible implementation, the determining module 902 is specifically configured to:
if the wired connection stability is greater than the wireless connection stability, determine the wired channel as the target channel; and
if the wired connection stability is less than the wireless connection stability, determine the wireless channel as the target channel.

In a possible implementation, the electronic device periodically sends a heartbeat packet to the vehicle through the wired channel, and receives a response packet corresponding to the heartbeat packet through the wired channel; and the first obtaining module 901 is specifically configured to:
obtain, by the electronic device, a first number of heartbeat packets sent to the vehicle within a preset period of time;
obtain, by the electronic device, a second number of received response packets sent by the vehicle within the preset period of time; and
determine, by the electronic device, the wired connection stability according to the first number and the second number.

In a possible implementation, the electronic device periodically sends a heartbeat packet to the vehicle through the wireless channel, and receives a response packet corresponding to the heartbeat packet through the wireless channel; and the second obtaining module 903 is specifically configured to:
obtain, by the electronic device, a third number of heartbeat packets sent to the vehicle within a preset period of time;
obtain, by the electronic device, a fourth number of response packets sent by the vehicle within the preset period of time; and
determine, by the electronic device, the wireless connection stability according to the third number and the fourth number.

In a possible implementation, the apparatus further includes: a connecting module 905; and
the connecting module 905 is configured to establish, by the electronic device, the wired channel connection and the wireless channel connection with the vehicle before the electronic device obtains the wired connection stability of the wired channel.

In a possible implementation, the connecting module 905 is specifically configured to:
establish, by the electronic device, the wired channel with the vehicle through the USB (universal serial bus) connection cable;
receive, by the electronic device, a vehicle identification sent by the vehicle through the wired channel;
establish, by the electronic device, a direct connection network with the vehicle according to the vehicle identification, where the direct connection network is used to enable the electronic device and the vehicle in a same local area network; and
send, by the electronic device, a wireless channel address to the vehicle through the direct connection network, to enable the vehicle to establish the wireless channel with the electronic device according to the wireless channel address.

In a possible implementation, the vehicle is connected to a hotspot network of the electronic device; and the connecting module 905 is specifically configured to:
send, by the electronic device, a wireless channel address to the vehicle through the hotspot network, to enable the vehicle to establish the wireless channel with the electronic device according to the wireless channel address; and
establish, by the electronic device, the wired channel with the vehicle through a USB connection cable.

The present disclosure provides a data processing method and apparatus, which are applied to the fields of internet of vehicles and smart cockpits in the field of data processing, so as to improve the connection stability between the vehicle and electronic device.

According to an embodiment of the present disclosure, the present disclosure further provides an electronic device, a readable storage medium, and a computer program product.

According to an embodiment of the present disclosure, the present disclosure further provides a computer program product, including: a computer program, which is stored in a readable storage medium, at least one processor of the electronic device may read the computer program from the readable storage medium, and the at least one processor executes the computer program to cause the electronic device to perform the solution provided by any one of the above embodiments.

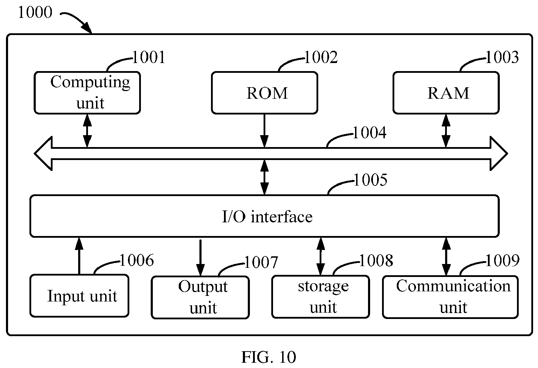

FIG. 10 is a schematic block diagram of an electronic device 1000 for implementing the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile apparatuses, such as a personal digital processor, a cellular phone, a smart phone, a wearable device, and other similar computing apparatuses. The components shown herein, their connections and relationships, and their functions are by way of example only, and are not intended to limit implementations of the present disclosure described and/or claimed herein.

As shown in FIG. 10, the electronic device 1000 includes a computing unit 1001, which can perform, according to a computer program stored in a read-only memory (ROM) 1002 or a computer program loaded from a storage unit 1008 to a random access memory (RAM) 1003, various appropriate actions and processes. In the RAM 1003, various programs and data required for the operation of the device 1000 can also be stored. The computing unit 1001, the ROM 1002, and the RAM 1003 are connected to each other through a bus 1004. An input/output (I/O) interface 1005 is also connected to the bus 1004.

Multiple components in the device 1000 are connected to the I/O interface 1005, including: an input unit 1006, such as a keyboard, a mouse, etc.; an output unit 1007, such as various types of displays, speakers, etc.; the storage unit 1008, such as a magnetic disk, an optical disc, etc.; and a communication unit 1009, such as a network card, a modem, and a wireless communication transceiver, etc. The communication unit 1009 allows the device 1000 to exchange information/data with other devices through a computer network such as the Internet and/or various telecommunication networks.

The computing unit 1001 may be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units that run machine learning model algorithms, a digital signal processor (DSP), any appropriate processor, controller, microcontroller, etc. The computing unit 1001 performs the various methods and processing described above, for example, a data processing method. For example, in some embodiments, the data processing method may be implemented as a computer software program, which is tangibly contained in a machine-readable medium, such as storage unit the 1008. In some embodiments, part or the entire computer program may be loaded and/or installed on the device 1000 via the ROM 1002 and/or the communication unit 1009. When the computer program is loaded into the RAM 1003 and executed by the computing unit 1001, one or more steps of the data processing method described above can be performed. Alternatively, in other embodiments, the computing unit 1001 may be configured to perform, in any other suitable manner (for example, by means of firmware), the data processing method.

Various implementations of the systems and technologies described herein can be implemented in a digital electronic circuit system, an integrated circuit system, a field programmable gate array (FPGA), an application specific integrated circuit (ASIC), an application-specific standard product (ASSP), a system-on-chip system (SOC), a complex programmable logic device (CPLD), computer hardware, firmware, software, and/or combinations thereof. These various implementations may include: being implemented in one or more computer programs. The one or more computer programs may be executed and/or interpreted on a programmable system including at least one programmable processor. The programmable processor may be a dedicated or general programmable processor, may receive data and instructions from a storage system, at least one input apparatus, and at least one output apparatus, and transmit data and instructions to the storage system, the at least one input apparatus and the at least one output apparatus.

The program code used to implement the method of the present disclosure can be written in any combination of one or more programming languages. These program codes can be provided to a processor or a controller of a general-purpose computer, a special-purpose computer, or other programmable data processing apparatuses, so that when the program codes are executed by the processor or the controller, the functions/operations specified in the flowchart and/or the block diagram are implemented. The program code can be executed entirely on the machine and partly on the machine, and the program code, as an independent software package, can be executed partly on the machine and partly on the remote machine, or the program code can be executed completely on the remote machine or the server.

In the context of the present disclosure, a machine-readable medium may be a tangible medium, which may contain or store a program for use by the instruction execution system, apparatus, or device, or the machine-readable medium may include the program used in conjunction with the instruction execution system, apparatus, or device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or may be any suitable combination of the above. More specific examples of machine-readable storage medium would include the electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any appreciate combination of the above.

In order to provide interaction with the user, the system and the technique described herein may be implemented on a computer, and the computer has: a display apparatus for displaying information to the user (such as a CRT (cathode ray tube) or an LCD (liquid crystal display) monitor); and a keyboard and a pointing apparatus (such as a mouse or a trackball), and the user may provide an input to the computer through the keyboard and the pointing apparatus. Other kinds of apparatuses may also be used to provide the interaction with the user; for example, feedback provided to the user may be any form of sensor feedback (e.g., visual feedback, auditory feedback, or tactile feedback); and may receive the input from the user in any form (including an acoustic input, a voice input, or a tactile input).

The system and the technique described herein may be implemented in a computing system that includes back-end components (for example, as a data server), or a computing system that includes intermediate components (for example, an application server), or a computing system that includes front-end components (for example, a user computer with a graphical user interface or a web browser, through which the user may interact with the implementations of the system and the technique described herein), or a computing system that includes any combination of the back-end components, the intermediate components, or the front-end components. The components of the system may be interconnected by any form or medium of digital data communications (e.g., a communication network). Examples of the communication network include: a local area network (LAN), a wide area network (WAN), and Internet

The computing system may include a client and a server. The client and the server are generally far away from each other, and generally interact with each other through the communication network. A relationship between the client and the server is generated by computer programs running on a corresponding computer and having a client-server relationship for each other. The server can be a cloud server, also known as a cloud computing server or a cloud host, which is a host product in the cloud computing service system, to solve defects of difficult management and weak business scalability in traditional physical host and VPS service ("Virtual Private Server", or VPS for short). The server can also be a server of a distributed system or a server combined with a blockchain.

Understanding that the various forms of processes shown above can be used to reorder, add or delete steps. For example, the steps described in the present disclosure can be performed in parallel, sequentially, or in a different order, as long as the desired result of the technical solution disclosed in the present disclosure can be achieved, which is not limited herein.

The above specific implementations do not constitute a limitation onto the scope of protection of the present disclosure. Those skilled in the art should understand that various modifications, combinations, sub-combinations, and substitutions can be made according to design requirements and other factors. Any amendments, equivalent substitutions and improvements made within the principles of the present disclosure shall be included in the scope of protection of the present disclosure.

## Claims

1. A data processing method, applied to an electronic device, wherein the electronic device is connected to a vehicle through a wired channel and a wireless channel, and the method comprises:
obtaining (S301), by the electronic device, wired connection stability of the wired channel;
when the wired connection stability is greater than or equal to a first threshold, determining (S302), by the electronic device, the wired channel as a target channel;
when the wired connection stability is less than the first threshold, obtaining (S303), by the electronic device, power of the electronic device and wireless connection stability of the wireless channel, and determining, by the electronic device, according to the power of the electronic device and the wireless connection stability, a target channel from the wired channel and the wireless channel; and
performing (S304), by the electronic device, data transmission with the vehicle through the target channel.

2. The method according to claim 1, wherein the determining, by the electronic device, according to the power of the electronic device and the wireless connection stability, the target channel from the wired channel and the wireless channel comprises:
when the power of the electronic device is greater than or equal to a second threshold, if the wireless connection stability is greater than or equal to the first threshold, determining, by the electronic device, the wireless channel as the target channel; and if the wireless connection stability is less than the first threshold, determining, by the electronic device, the target channel according to the wired connection stability and the wireless connection stability; and
when the power of the electronic device is less than the second threshold, if the wired connection stability is greater than or equal to the first threshold, determining, by the electronic device, the wired channel as the target channel; and if the wired connection stability is less than the first threshold, determining, by the electronic device, the target channel according to the wired connection stability and the wireless connection stability.

3. The method according to claim 2, wherein the determining, by the electronic device, the target channel according to the wired connection stability and the wireless connection stability comprises:
if the wired connection stability is greater than the wireless connection stability, determining the wired channel as the target channel; and
if the wired connection stability is less than the wireless connection stability, determining the wireless channel as the target channel.

4. The method according to any one of claims 1 to 3, wherein the electronic device periodically sends a heartbeat packet to the vehicle through the wired channel, and receives a response packet corresponding to the heartbeat packet through the wired channel; the obtaining, by the electronic device, the wired connection stability of the wired channel comprises:
obtaining, by the electronic device, a first number of heartbeat packets sent to the vehicle within a preset period of time;
obtaining, by the electronic device, a second number of received response packets sent by the vehicle within the preset period of time; and
determining, by the electronic device, the wired connection stability according to the first number and the second number.

5. The method according to any one of claims 1 to 4, wherein the electronic device periodically sends a heartbeat packet to the vehicle through the wireless channel, and receives a response packet corresponding to the heartbeat packet through the wireless channel; and obtaining, by the electronic device, wireless connection stability of the wireless channel comprises:
obtaining, by the electronic device, a third number of heartbeat packets sent to the vehicle within a preset period of time;
obtaining, by the electronic device, a fourth number of response packets sent by the vehicle within the preset period of time; and
determining, by the electronic device, the wireless connection stability according to the third number and the fourth number.

6. The method according to any one of claims 1 to 5, before obtaining, by the electronic device, the wired connection stability of the wired channel, the method further comprising:
establishing, by the electronic device, the wired channel connection and the wireless channel connection with the vehicle.

7. The method according to claim 6, wherein the establishing, by the electronic device, the wired channel connection and the wireless channel connection with the vehicle comprises:
establishing (S601), by the electronic device, the wired channel with the vehicle through a universal serial bus, USB, connection cable;
receiving (S602), by the electronic device, a vehicle identification sent by the vehicle through the wired channel;
establishing (S603), by the electronic device, a direct connection network with the vehicle according to the vehicle identification, wherein the direct connection network is used to enable the electronic device and the vehicle in a same local area network; and
sending (S604), by the electronic device, a wireless channel address to the vehicle through the direct connection network, to enable the vehicle to establish the wireless channel with the electronic device according to the wireless channel address.

8. The method according to claim 6, wherein the vehicle is connected to a hotspot network of the electronic device; and the establishing, by the electronic device, the wired channel connection and the wireless channel connection with the vehicle comprises:
sending, by the electronic device, a wireless channel address to the vehicle through the hotspot network, to enable the vehicle to establish the wireless channel with the electronic device according to the wireless channel address; and
establishing, by the electronic device, the wired channel with the vehicle through a USB connection cable.

9. A data processing apparatus (900), applied to an electronic device (1000), wherein the electronic device (1000) is connected to a vehicle through a wired channel and a wireless channel, and the apparatus comprises:
a first obtaining module (901), configured to obtain wired connection stability of the wired channel;
a determining module (902), configured to, when the wired connection stability is greater than or equal to a first threshold, determine the wired channel as a target channel;
a second obtaining module (903), configured to, when the wired connection stability is less than the first threshold, obtain power of the electronic device and wireless connection stability of the wireless channel, and determine, according to the power of the electronic device and the wireless connection stability, a target channel from the wired channel and the wireless channel; and
a transmitting module (904), configured to perform data transmission with the vehicle through the target channel.

10. The apparatus according to claim 9, wherein the determining module (902) is configured to:
when the power of the electronic device is greater than or equal to a second threshold, if the wireless connection stability is greater than or equal to the first threshold, determine the wireless channel as the target channel; and if the wireless connection stability is less than the first threshold, determine the target channel according to the wired connection stability and the wireless connection stability; and
when the power of the electronic device is less than the second threshold, if the wired connection stability is greater than or equal to the first threshold, determine the wired channel as the target channel; and if the wired connection stability is less than the first threshold, determine the target channel according to the wired connection stability and the wireless connection stability.

11. The apparatus according to claim 10, wherein the determining module (902) is configured to:
if the wired connection stability is greater than the wireless connection stability, determine the wired channel as the target channel; and
if the wired connection stability is less than the wireless connection stability, determine the wireless channel as the target channel.

12. The apparatus according to any one of claims 9 to 11, wherein the electronic device periodically sends a heartbeat packet to the vehicle through the wired channel, and receives a response packet corresponding to the heartbeat packet through the wired channel; and the first obtaining module (901) is configured to:
obtain a first number of heartbeat packets sent to the vehicle within a preset period of time;
obtain a second number of received response packets sent by the vehicle within the preset period of time; and
determine the wired connection stability according to the first number and the second number.

13. The apparatus according to any one of claims 9 to 12, wherein the electronic device periodically sends a heartbeat packet to the vehicle through the wireless channel, and receives a response packet corresponding to the heartbeat packet through the wireless channel; and the second obtaining module (903) is configured to:
obtain a third number of heartbeat packets sent to the vehicle within a preset period of time;
obtain a fourth number of response packets sent by the vehicle within the preset period of time; and
determine the wireless connection stability according to the third number and the fourth number.

14. A non-transitory computer-readable storage medium storing computer instructions, wherein the computer instructions are used to cause a computer to perform the method according to any one of claims 1 to 8.

15. A computer program product, wherein the computer program product comprises a computer program which, when executed by a processor, implements steps of the method according to any one of claims 1 to 8.
